# EUROPEAN PATENT APPLICATION

(11) **EP 1 491 847 A1**
(43) Date of publication of application: **29.12.2004**
(21) Application number: 04445066.6
(22) Date of filing: 02.06.2004
(51) Int. Cl.: F41G 3/00, F41G 3/06

(54) **Reconnaissance and sighting device**

(30) Priority: 16.06.2003 SE 0301734
(71) Applicant: SAAB AB, 581 88 Linköping (SE)
(72) Inventor: Svensson, Nils-Ola, 113 59 Stockholm (SE)
(74) Representative: Falk, Bengt

(57) **Abstract**

The invention relates to a reconnaissance and sighting device comprising a first device (10, 13) for collecting optical information over a large space and a second device (10, 21, 25) for collecting optical information from a specific point in a specific direction. According to the invention, the first and the second device (10, 13 and 10, 21, 25 respectively) are integrated into one unit for simultaneous collection of the optical information. The invention makes it possible to carry out reconnaissance over a large angular space and to aim towards a specific point simultaneously, without the devices blocking each other so that blind spots arise.

## Description

The present invention relates to a reconnaissance and sighting device comprising a first device for collecting optical information over a large space and a second device for collecting optical information from a specific point in a specific direction. The invention has applications in, among other things, the military field, where there is a need for electro-optical sensors that simultaneously provide a broad and a specific perception of the surroundings and where, for example, the reconnaissance and sighting device can be mounted on an armoured vehicle.

In known systems that are utilized, the user is given either a mechanically-scanned broad perception of the surroundings or specific information about a specific point. In order to obtain both a broad and a specific perception of the surroundings, it has previously been necessary to use two different separate pieces of apparatus at the same time. The broad perception of the surroundings is obtained by a mechanically-scanned image that is created and image-processed into a flat area on a display screen.

A disadvantage of the known solution with two pieces of apparatus that are used at the same time is that at various times one piece of apparatus blocks the other and vice versa, resulting in "blind spots" arising in the reconnaissance and sighting area. In addition, the rotating exterior parts of the known pieces of apparatus require complicated equipment for cleaning the optical apertures. It is also difficult and complicated to create an effective ballistic shield for the apertures of the pieces of apparatus. The known pieces of apparatus have exterior moving parts that are in the sight line of the system. These moving parts are particularly sensitive to external influences such as, for example, dirt, ice, etc. In addition, the exterior rotating parts mean that the equipment is easy to detect.

The object of the present invention is to achieve a reconnaissance and sighting device which does not have the disadvantages and problems described above. The object of the invention is achieved by means of a reconnaissance and sighting device characterized in that the first and the second device are integrated into one unit for simultaneous collection of the optical information. By means of the invention, a reconnaissance and sighting device is obtained without "blind spots" which is easier to clean, to protect from ballistic effects and which better protects moving parts.

According to an advantageous embodiment, the reconnaissance and sighting device is characterized in that it comprises a hollow essentially rotationally-symmetrical tapering body that is open at the broad end and has a mirrored outer surface, which body is common to the first and second device. By means of the mirrored outer surface of the rotationally-symmetrical tapering body, light can be taken in from the surroundings through 360°. If the axis of rotation of the body is arranged at a 90° angle to the horizontal plane or the ground, this means that light can be taken in from the whole revolution in the plane of the ground.

The rotationally-symmetrical tapering body can have varying forms. According to a suitable embodiment, it is proposed that the rotationally-symmetrical body consists of a hollow cone with an open base and mirrored outer surface. Such a tapering shape with a constant angle between the surface and the axis is relatively easy to manufacture, for example by turning and subsequent polishing and application of a mirror surface. The proposed conical shape is, however, only to be regarded as an example of a suitable shape and does not exclude other rotationally-symmetrical shapes that may prove to be more optimal.

According to another advantageous embodiment, the reconnaissance and sighting device is characterized in that a first electro-optical sensor device is arranged with its optical axis on a production of the axis of the tapering body beyond its vertex in order to be able to take in light from the surroundings through 360° via the mirrored outer surface, which first electro-optical sensor device and also the rotationally-symmetrical tapering body are comprised in the first device. The location of the sensor device makes it possible for it to be protected effectively against external influences in the form of, for example, dirt and ballistic forces.

According to yet another advantageous embodiment, the reconnaissance and sighting device is characterized in that a second electro-optical sensor device is arranged in such a way that it can be rotated around the axis of symmetry of the rotationally-symmetrical tapering body, in that a device for changing the direction of light is arranged between the second electro-optical sensor device and the tapering body, whereby a beam path is created between a specific point and the second sensor device via the mirrored outer surface of the tapering body and the device for changing the direction of light, with the second electro-optical sensor device, the rotationally-symmetrical tapering body and the device for changing the direction of light being comprised in the second device. By means of the arrangement of the second sensor device, the sensor device can be rotated in a well-protected position to any position in order to be aimed towards a specific point.

The second sensor device can advantageously consist of at least two sensors of the same or different types, such as infrared sensors and/or laser light sensors. As a result of the ability to introduce several sensors, among other things more functions can be added and the part of the frequency spectrum that is utilized can be increased.

According to an advantageous embodiment, the device for changing the direction of light consists of an optically-reflecting device that is arranged in such a way that it can be tilted. The device for changing the direction of light can be used primarily to obtain a suitable angle of elevation. When there are several sensors in the arrangement, the optically-reflecting device can advantageously comprise a first semitransparent surface that reflects radiation within a first frequency range and transmits radiation within a second frequency range and a second reflecting surface that reflects radiation at least within the second frequency range. Such an arrangement makes it possible, for example, for infrared radiation to be separated from laser light.

In order to increase the field of vision of the reconnaissance and sighting device, according to yet another advantageous embodiment, a third electro-optical sensor device is arranged in the tapering body and is aimed to cover an essentially symmetrical field of vision radiating out from the open end of body. By means of such an arrangement, the upper part of the space can also be monitored and, in combination with the first sensor device, the whole space that surrounds a ground-based reconnaissance and sighting device can be covered.

In order to protect the reconnaissance and sighting device against dirt, ice, moisture and the like, according to a proposed embodiment, an essentially cylindrical window is arranged to cover the mirrored outer surface of the tapering body. The window protects the device, while at the same time the device retains a symmetrical shape which, among other things, can be advantageous in avoiding detection.

The cylindrical window can be arranged to rotate around the axis of symmetry of the rotationally-symmetrical tapering body at the same speed and in the same direction as the rotation of the second electro-optical sensor device around the same axis of symmetry. Such a design means that the same part of the window is always right in front of the second sensor device. As the second sensor device normally makes higher demands on the transmitting characteristics of the window than the first and third sensor devices, a matching of the quality requirements to the individual sensor devices can reduce the cost of the window. According to a preferred solution, it is proposed that the part of the cylindrical window which is used by the second electro-optical sensor device is manufactured with a higher degree of accuracy than other parts of the cylindrical window. According to another proposed solution, the part of the cylindrical window which is used by the second electro-optical sensor device consists of plate glass.

In order to create a ballistic shield for the reconnaissance and sighting device, according to a proposed embodiment, a tube-shaped sleeve is arranged in such a way that it can be moved out and cover parts of the reconnaissance and sighting device. The sleeve provides the sighting and reconnaissance device with a shield that is symmetrical in shape and accordingly can be difficult to detect. The design can be made relatively compact and it is relatively easy to change between the protected and unprotected positions.

In order to increase the level of protection but still be able to monitor the surroundings to a certain extent, the tube-shaped sleeve can be provided with one or more slots running round the sleeve in a plane at right angles to the axis of symmetry of the sleeve.

In another embodiment of the reconnaissance and sighting device, the tube-shaped sleeve is designed as two or more sections that can be moved individually. By this means, the reconnaissance and sighting device can be given full performance in certain directions and the same time a certain reduction of ballistic damage. In addition, a reduction of the signature of the reconnaissance and sighting device is obtained in certain directions.

The rotationally-symmetrical design of the reconnaissance and sighting device makes the device relatively easy to keep clean and an embodiment is characterized in that it comprises cleaning devices utilizing rinsing and/or wiping principles. The design of the reconnaissance and sighting device means that the apertures can be cleaned at the same time as reconnaissance is being carried out, or alternatively while the device is being aimed towards any point.

According to yet another suitable embodiment, the reconnaissance and sighting device is arranged to be able to be moved out of and withdrawn beneath a shell, such as the casing on an armoured vehicle. By means of this embodiment, the ballistic protection can be improved, a protected transportation position can be achieved, a suitable reconnaissance height can be obtained for the sensor devices and, last but not least, a reduced signature is obtained.

The invention will be described below in greater detail with reference to the attached drawings in which:
Figure 1 shows a side view of a reconnaissance and sighting device according to the invention intended to be mounted in the roof or the turret of an armoured vehicle or the like.
Figure 2 shows a vertical cross-section B-B through the reconnaissance and sighting device according to Figure 1 and where the elevation unit and the protective sleeve have been omitted.
Figure 3 shows in perspective view an example of how components comprised in the reconnaissance and sighting device according to invention can be arranged.
Figure 4 shows in perspective view the arrangement according to Figure 3 in a second position and supplemented by a window.
Figure 5 shows an alternative window embodiment that can be comprised in the reconnaissance and sighting device according to the invention.
Figures 6a and 6b show two different examples of ballistic shield that can be comprised in the reconnaissance and sighting device according to the invention.

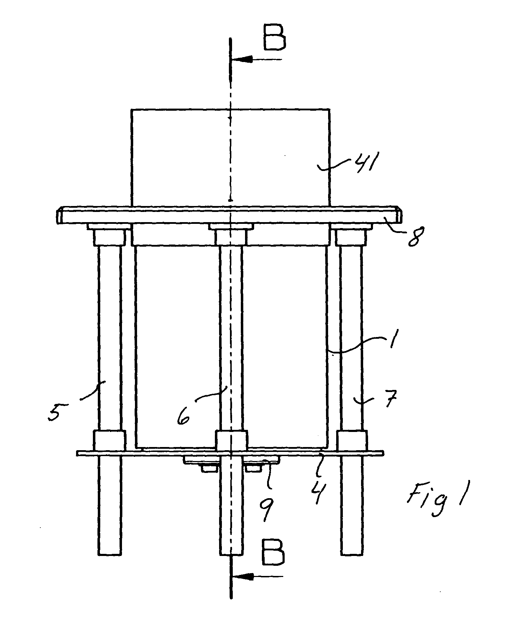

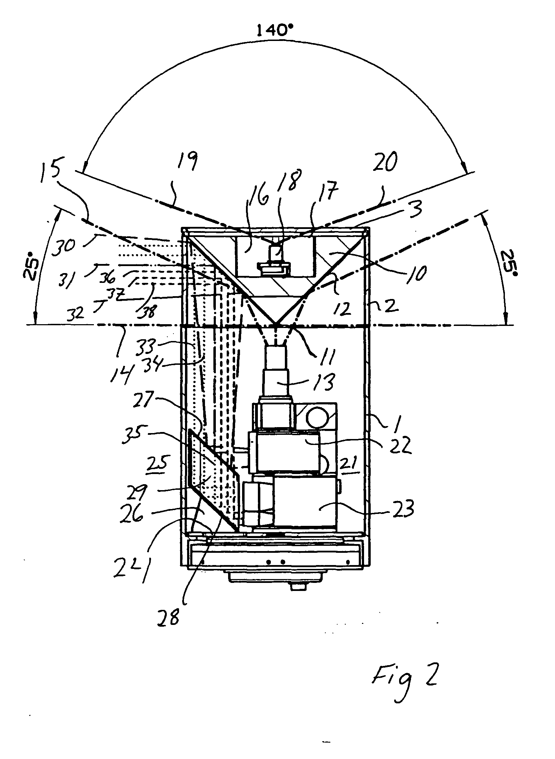

The reconnaissance and sighting device shown in Figure 1 is essentially contained in a circular cylindrical casing 1 with an outer surface forming a circular cylindrical window 2 in the top part and a flat circular window 3 covering the upper end of the cylindrical casing. Figure 1 shows a splinter shield 41 that covers the window 2. For the reference numerals 2 and 3, refer therefore to Figure 2. The casing 1 is attached at its lower end to a bottom plate 4 that can be moved along parallel rods 5, 6 and 7. A mounting plate 8 arranged at one end of the rods 5-7 is designed to be attached to the casing of an armoured vehicle or the like. By means of a drive device 9, not shown in greater detail, the upper part of the casing can be raised up through the mounting plate to the end position shown in Figure 1. In a second end position, the upper part of the casing 1 can be lowered down into a protected position below the mounting plate 8.

The construction of the reconnaissance and sighting device will now be described in greater detail with reference to Figure 2. A cone 10 is arranged in the upper part of the casing. In an alternative embodiment, the cone can be replaced by another suitable rotationally-symmetrical body. The cone is inverted, with its vertex 11 pointing downwards. The outer surface of the cone is covered with a radiation-reflecting material 12 forming a conical mirror. In the cone 10, there is a cavity 16 with an opening 17 towards the base of the cone. A first electro-optical sensor device 13 is arranged on a production of the axis of the cone beyond the vertex 11, with its optical axis coinciding with the production of the axis of rotation of the cone beyond the vertex. The sensor device 13 takes in the light from the surroundings through 360° and at an angle to the horizontal plane that is determined by the field of vision of the sensor device and the vertex angle of the conical mirror 12. In the figure, the area from which the sensor device takes in light is delimited by dotted-dashed lines 14 and 15.

In order to provide supplementary optical information from the upper part of the space, the reconnaissance and sighting device is provided with an additional electro-optical sensor device 18, called a third sensor device in the following, arranged in the cavity 16 of the cone 10 and directed towards the opening 17. The field of vision for this third sensor device 18, delimited by lines 19, 20 shown as alternately short and long dashes, is so arranged in relation to the field of vision of the first sensor device that immediate and complete cover is obtained in the space.

A second electro-optical sensor device 21 is arranged in association with the first electro-optical sensor device 13, which is mounted on the production of the axis of the cone 10 beyond its vertex. In the embodiment shown, the second sensor device comprises an infrared sensor 22 and a combined laser transmitter and laser receiver 23, all of which have their optical axes aligned with an imaginary radius of the reflecting surface 12 of the cone. The sensors 22, 23 are mounted on a carousel 24 with an axis of rotation that is coaxial with the axis of symmetry of the cone 10. In the sensor device, there is also an optically-reflecting device 25 that can be tilted. The device 25 that can be tilted is suspended in a cradle 26. The device 25 comprises a semitransparent surface 27 and a reflecting surface 28 separated by a light-transmitting layer 29. The semitransparent surface 27 reflects radiation within the infrared frequency range and transmits laser light, while the reflecting surface 28 reflects light within the laser wavelengths used. Examples of possible beam paths between the second sensor device and the surroundings of the reconnaissance and sighting device are shown by means of broken lines 30, 31 and 32 for the infrared sensor and by means of dotted lines 33-35 for the laser transmitter and broken lines 36-38 for the laser receiver. By means of the described arrangement, the second sensor device can be rotated around the axis of symmetry of the cone into any position or alternatively can scan a complete revolution or move in a search pattern without affecting the reconnaissance function of the first sensor device. In order to set the required angle of elevation, the cradle is inclined forwards or backwards.

By means of the reconnaissance and sighting device described above, a broad perception of the surroundings is provided, based primarily on the first and third sensor devices, while the second sensor device provides more specific information about a specific point. At the same time, the possibility that the second sensor device can be utilized for sweeping round a whole revolution is not excluded. The information that the sensor devices collect is image-processed in real time and presented to the operators in a way that can be understood. Methods for image processing are already known and are therefore not described here in greater detail.

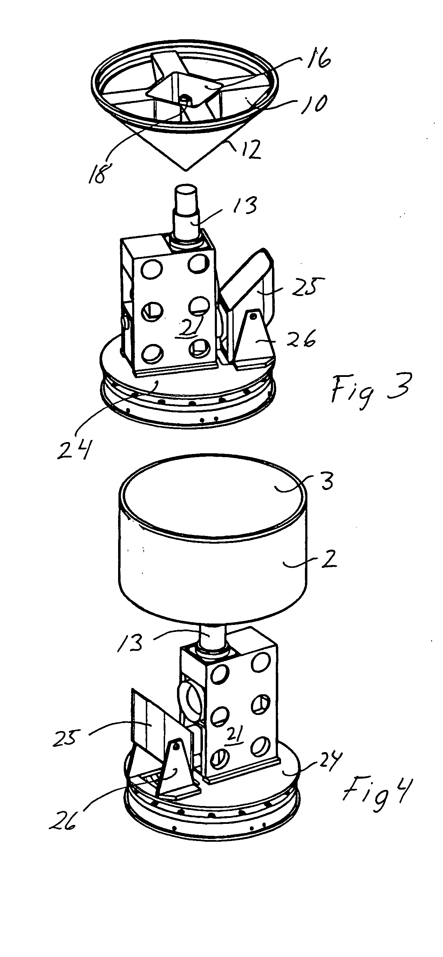

Figures 3 and 4 show vital parts comprised in the reconnaissance and sighting device. Components that are to be found in the description of Figures 1 and 2 have been given the same reference numerals and are therefore not described here. The principal differences between Figures 3 and 4 are that the carousel 24 is shown in two different positions that differ by almost 180° in angle of rotation. Another difference is that the window parts 2 and 3 in the reconnaissance and sighting device are shown in figure 4 and accordingly cover the cone 10 shown in Figure 3.

Figure 5 shows an alternative embodiment of the window that allows radiation to pass through while at the same time protecting the equipment inside against dirt, moisture and ice. The cylindrical window 2 around the cone 10 has been provided by plate glass 39 in a frame 40. By arranging the window 2 so that it rotates around the axis of symmetry of the cone 10 at the same speed and in the same direction as the second sensor device 21 is arranged to rotate around the same axis of symmetry, it can be ensured that the plate glass is always utilized for the beam path associated with the second sensor device. By meeting the high requirements for the window within a limited area in this way, while at the same time meeting lower requirements for other parts of the window, the cost of the window can be kept down or alternatively the performance can be improved. Alternatively, the part of the window that is utilized by the second sensor device can be manufactured to extra high specifications in comparison with other larger parts of the window. The advantages of using plate glass 39 is that it is easier to achieve high optical performance and a choice of material can be made that is optimized for the second sensor device.

As the reconnaissance and sighting device which has been described above does not have exterior moving parts, any splinter shield can be arranged in the same place and therefore the mechanical construction becomes relatively uncomplicated. The splinter shield can be designed as a tube that is moved out as a sleeve over the reconnaissance and sighting device and in particular its window 2. A simple variant of the sleeve is shown in Figure 1 and has been given the reference 41. The sleeve is designed in one piece without openings in the outer surface.

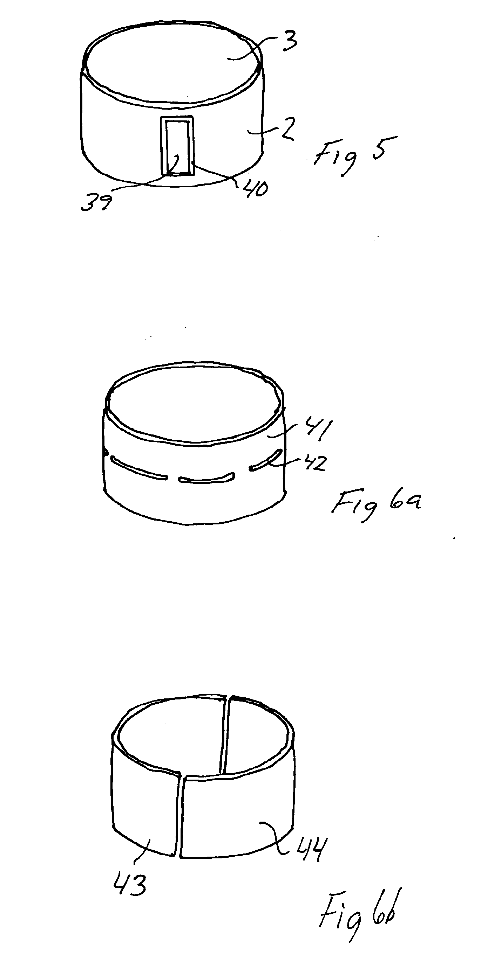

Figure 6a shows another embodiment of the sleeve 41. In this case, the sleeve has been provided with one or more slots 42 that run round the sleeve in a common plane at right angles to the axis of symmetry of the sleeve. The sleeve now permits limited observations to be carried out with little risk of exposure to ballistic damage.

Figure 6b shows an example of an additional embodiment of the sleeve. The sleeve 41 has been divided into two halves 43 and 44 that can be moved individually. In this way, the activity can be carried out with full performance in a limited angular space, while at the same time a certain degree of protection from ballistic damage is provided and the signature of the reconnaissance and sensor device is minimized in certain directions. In this connection, it can be pointed out that it is also possible to divide the sleeve into more than two sections that can be moved individually.

For cleaning the reconnaissance and sighting device, wipers and/or a rinsing system can be arranged. As a result of the shape of the reconnaissance and sighting device, the surfaces that are to be cleaned are relatively easy to access both by wiper blade and by rinsing.

As the reconnaissance and sighting device is essentially cylindrical in shape, the device can suitably be arranged in the roof of the turret of an armoured vehicle in order to be able to be moved out of and withdrawn back into the turret. The withdrawn position gives a minimal signature, while the area of observation is greatly reduced as in principle only the third sensor device which is directed upwards can provide information. The ballistic protection is increased by the turret's existing ballistic shield. In addition, the withdrawn position provides good protection of various types on such occasions when it is not necessary to utilize the reconnaissance and sighting system, for example when the vehicles are in convoy.

The invention is not limited to the embodiments described above by way of example, but can be modified within the framework of the following claims.

## Claims

1. Reconnaissance and sighting device comprising a first device for collecting optical information over a large space and a second device for collecting optical information from a specific point in a specific direction, **characterized in that** the first and the second device are integrated into one unit for simultaneous collection of the optical information.

2. Reconnaissance and sighting device according to Claim 1, **characterized in that** the reconnaissance and sighting device comprises a hollow essentially rotationally-symmetrical tapering body that is open at the broad end and has a mirrored outer surface, which body is common to the first and second device.

3. Reconnaissance and sighting device according to Claim 2, **characterized in that** the rotationally-symmetrical body consists of a hollow cone with an open base and a mirrored outer surface.

4. Reconnaissance and sighting device according to Claim 2 or 3, **characterized in that** a first electro-optical sensor device is arranged with its optical axis on a production of the axis of the tapering body beyond its vertex, in order to be able to take in light from the surroundings through 360° via the mirrored outer surface, which first electro-optical sensor device and also the rotationally-symmetrical tapering body are comprised in the first device.

5. Reconnaissance and sighting device according to any one of Claims 2-4, **characterized in that** a second electro-optical sensor device is arranged in such a way that it can be rotated around the axis of symmetry of the rotationally-symmetrical tapering body, **in that** a device for changing the direction of light is arranged between the second electro-optical sensor device and the tapering body, whereby a beam path is created between a specific point and the second sensor device via the mirrored outer surface of the tapering body and the device for changing the direction of light, with the second electro-optical sensor device, the rotationally-symmetrical tapering body and the device for changing the direction of light being comprised in the second device.

6. Reconnaissance and sighting device according to Claim 5, **characterized in that** the second sensor device consists of at least two sensors of the same or different types, such as infrared sensors and/or laser sensors.

7. Reconnaissance and sighting device according to Claim 5 or 6, **characterized in that** the device for changing the direction of light consists of an optically-reflecting device that is arranged in such a way that it can be tilted.

8. Reconnaissance and sighting device according to Claim 7, **characterized in that** the optically-reflecting device comprises a first semitransparent surface that reflects radiation within a first frequency range and transmits radiation within a second frequency range and a second reflecting surface that reflects radiation at least within the second frequency range.

9. Reconnaissance and sighting device according to any one of the preceding Claims 2-8, **characterized in that** a third electro-optical sensor device is arranged in the tapering body and is aimed to cover an essentially symmetrical field of vision radiating out from the open end of body.

10. Reconnaissance and sighting device according to any one of the preceding Claims 2-9, **characterized in that** an essentially cylindrical window is arranged to cover the mirrored outer surface of the tapering body.

11. Reconnaissance and sighting device according to Claim 10 and Claim 5, **characterized in that** the cylindrical window is arranged to rotate around the axis of symmetry of the rotationally-symmetrical tapering body at the same speed and in the same direction as the rotation of the second electro-optical sensor device around the same axis of symmetry.

12. Reconnaissance and sighting device according to Claim 11 and Claim 5, **characterized in that** the part of the cylindrical window which is used by the second electro-optical sensor device is manufactured with a higher degree of accuracy than other parts of the cylindrical window.

13. Reconnaissance and sighting device according to Claim 11 and Claim 5, **characterized in that** the part of the cylindrical window which is used by the second electro-optical sensor device consists of plate glass.

14. Reconnaissance and sighting device according to any one of the preceding claims, **characterized in that** a ballistic shield in the form of a tube-shaped sleeve is arranged in such a way that it can be moved out and cover parts of the reconnaissance and sighting device.

15. Reconnaissance and sighting device according to Claim 14, **characterized in that** the tube-shaped sleeve is provided with one or more slots, all running round the sleeve in a plane at right angles to the axis of symmetry of the sleeve.

16. Reconnaissance and sighting device according to Claim 14 or 15, **characterized in that** the tube-shaped sleeve is designed as two or more sections that can be moved individually.

17. Reconnaissance and sighting device according to any one of the preceding claims, **characterized in that** it comprises cleaning devices utilizing rinsing and/or wiping principles.

18. Reconnaissance and sighting device according to any one of the preceding claims, **characterized in that** the reconnaissance and sighting device is arranged to be able to be moved out of and withdrawn beneath a shell, such as the casing on an armoured vehicle.
